Europäisches Patentamt

**European Patent Office**

**Office européen des brevets**

(19)

(11) Publication number: **0 119 678**
A1

(12)

# EUROPEAN PATENT APPLICATION

(21) Application number: **84300152.0**

(22) Date of filing: **11.01.84**

(51) Int. Cl.³: **H 04 Q 11/04,** H 04 Q 1/448

(30) Priority: **18.01.83 GB 8301324**

(43) Date of publication of application: **26.09.84**
**Bulletin 84/39**

(84) Designated Contracting States: **AT BE CH DE FR IT LI LU NL SE**

(71) Applicant: **PLESSEY OVERSEAS LIMITED, Vicarage Lane, Ilford Essex IGl 4AQ (GB)**

(72) Inventor: **Allan, Paul, 37 Charnwood Lane, Arnold Nottingham NG5 6PE (GB)**

(74) Representative: **Goodman, Christopher, The Plessey Company plc, Beeston Nottingham NG9 1LA (GB)**

(54) **Tone generator.**

(57) A tone generator in which tones are stored in a digital format each tone being stored as a number of samples of specified amplitude the number of samples of each tone exactly corresponding to a whole number of cycles of that tone.

-1-

### Tone Generator

This invention relates to Tone Generators and more particularly to tone generators for a Digital PCM/TDM telecommunication exchange.

Tones are required in an exchange to indicate to subscribers the condition of their line and also for signalling purposes within the exchange.

In previous telephone exchanges such tones have been produced by combining together in various combinations the outputs of two or more frequency generators.

It is an object of the present invention to provide tone signals for a telecommunication exchange by storing the signals digitally in a memory. The digital PCM samples are then switched through the Digital Telephone exchange before going to a digital to analog converter to produce the tones.

According to the present invention there is provided a tone generator for a telecommunication exchange in which the tones are stored in a digital form in a memory, each tone being stored as a variable number of samples exactly corresponding to a whole number of complete cycles of each tone. (Assuming sine waves are to be generated.)

Embodiments of the present invention will now be

-2-

described, by way of example with reference to the accompanying drawings in which,

Figure 1 shows in block diagrammatic form a tone generator according to the present invention,

Figure 2 shows the tone generator of Figure 1 in greater detail and,

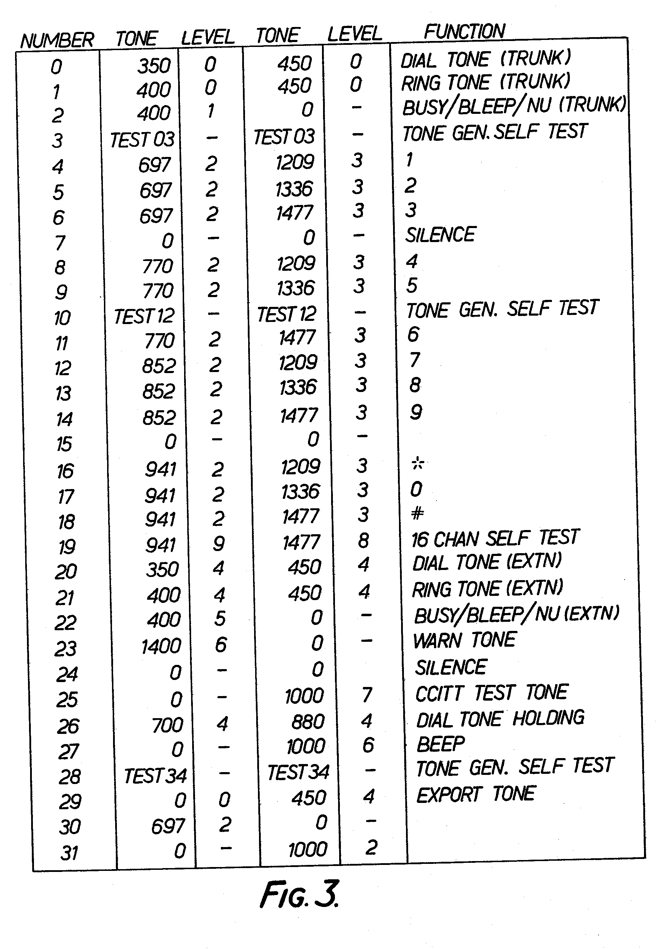

Figure 3 shows a table of generated tones as an example. The tones produced are programable due to the lookup tables used,

Figure 4 shows a table of actual frequencies produced and,

Figure 5 and 6 show general timing diagrams of the tone generator to the system data/address bus as described in co-pending British Patent Application No: 8323782.

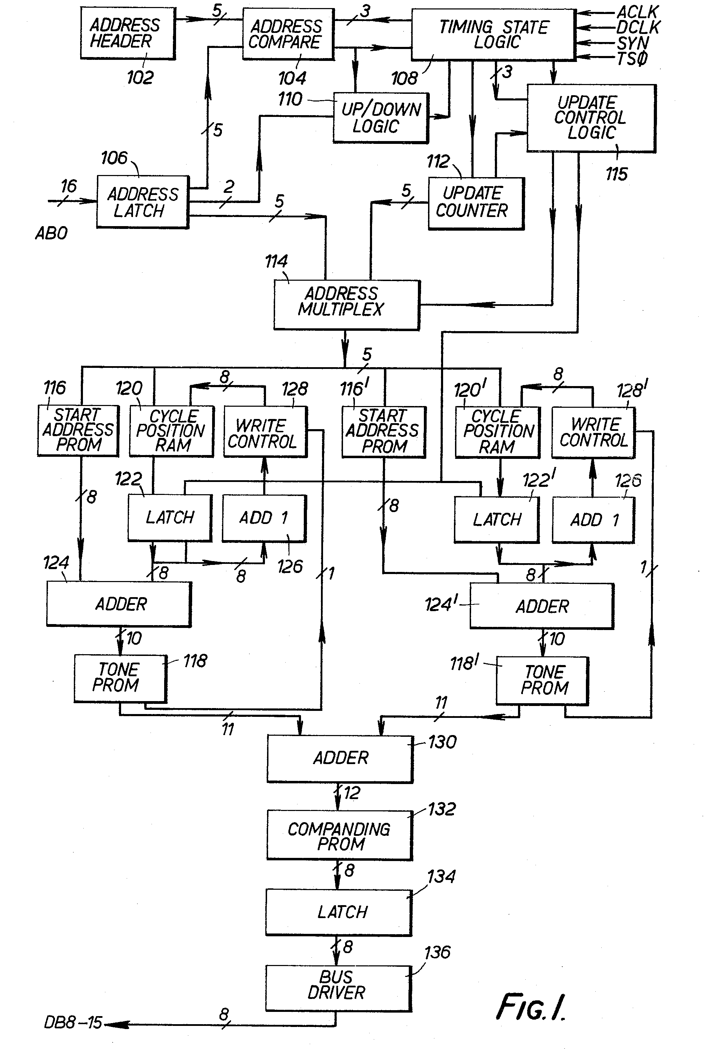

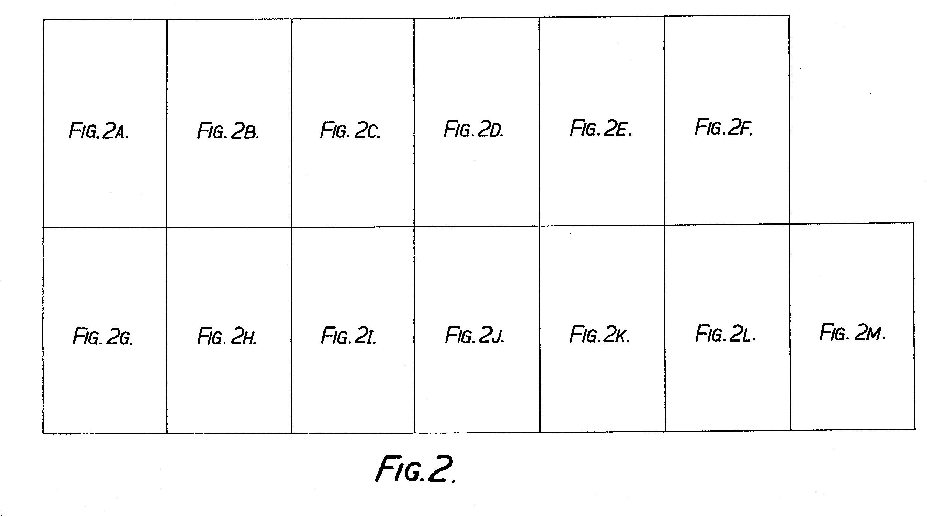

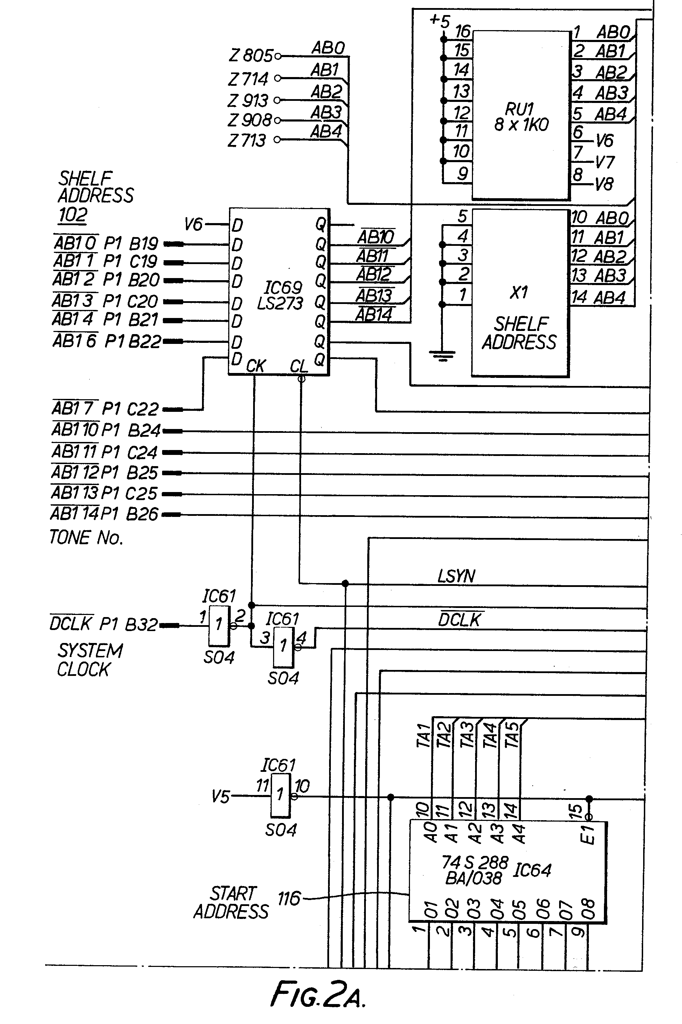

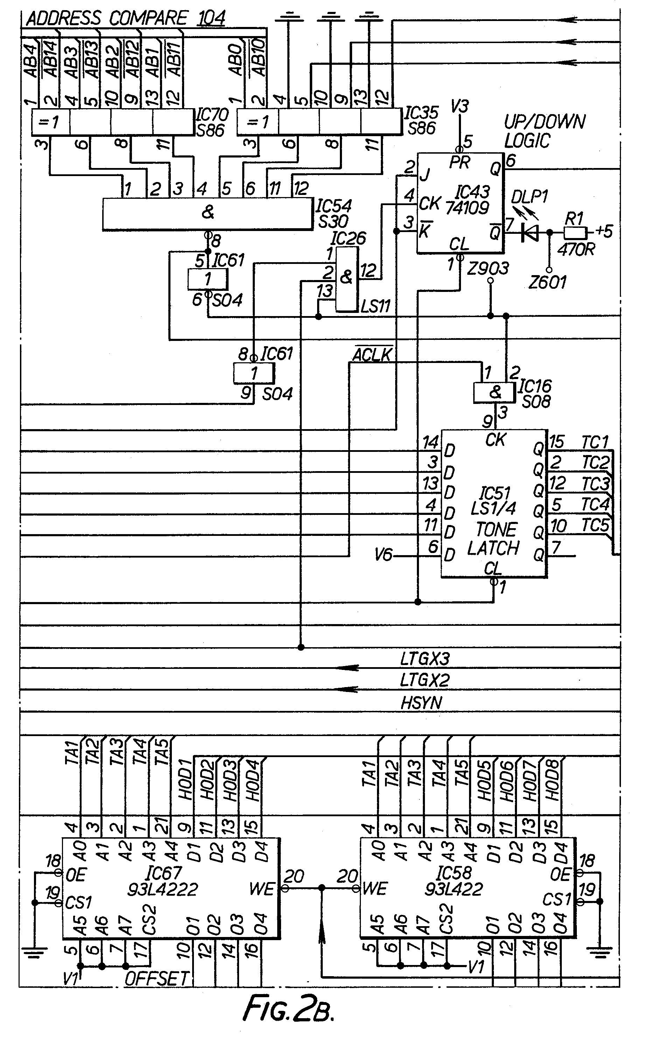

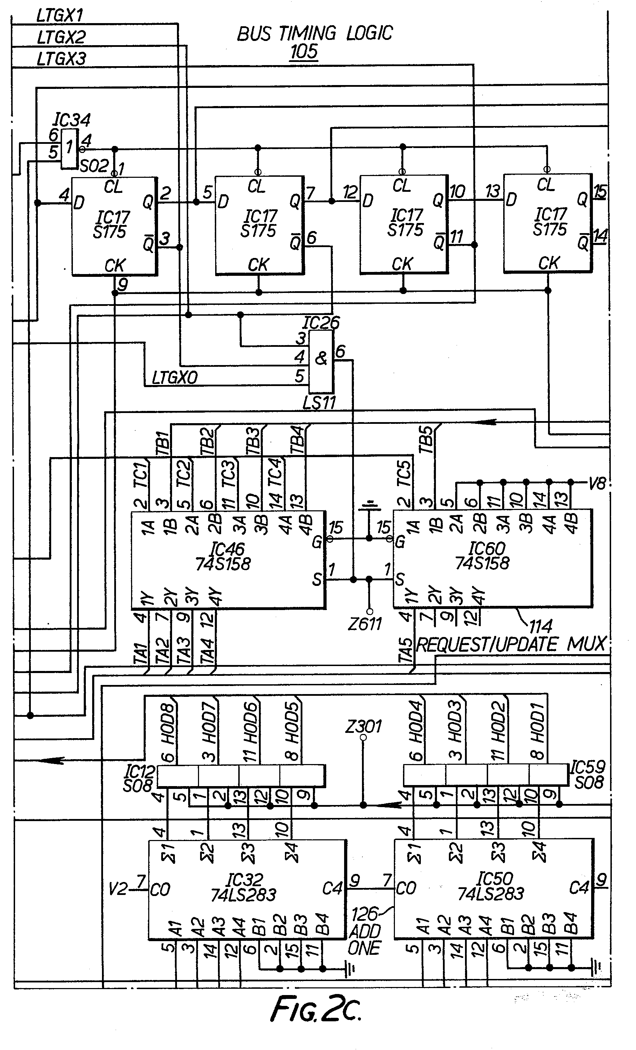

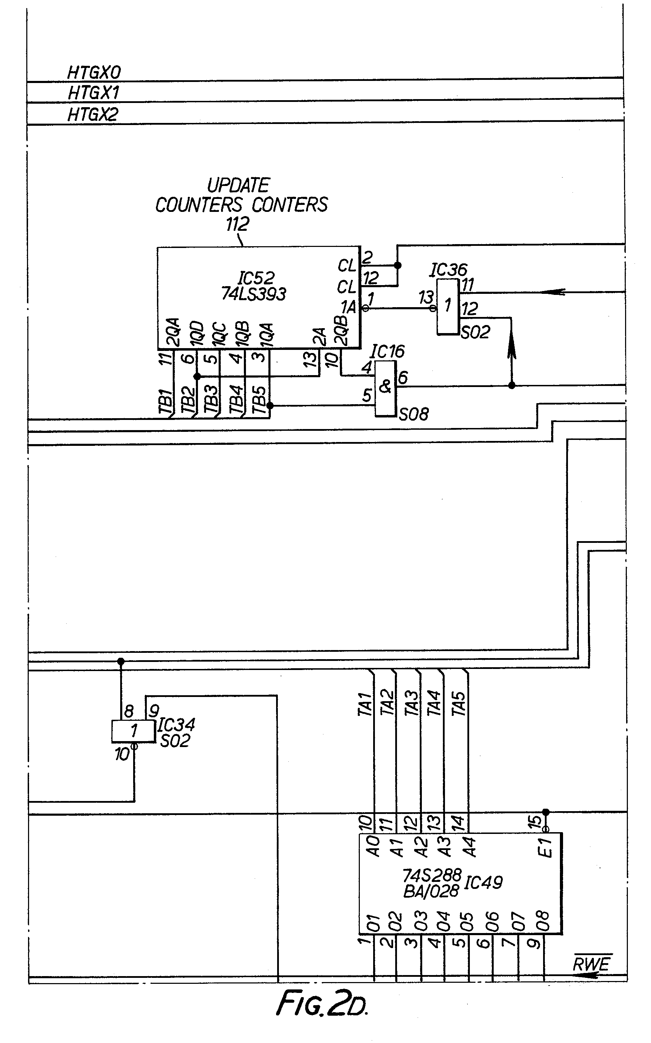

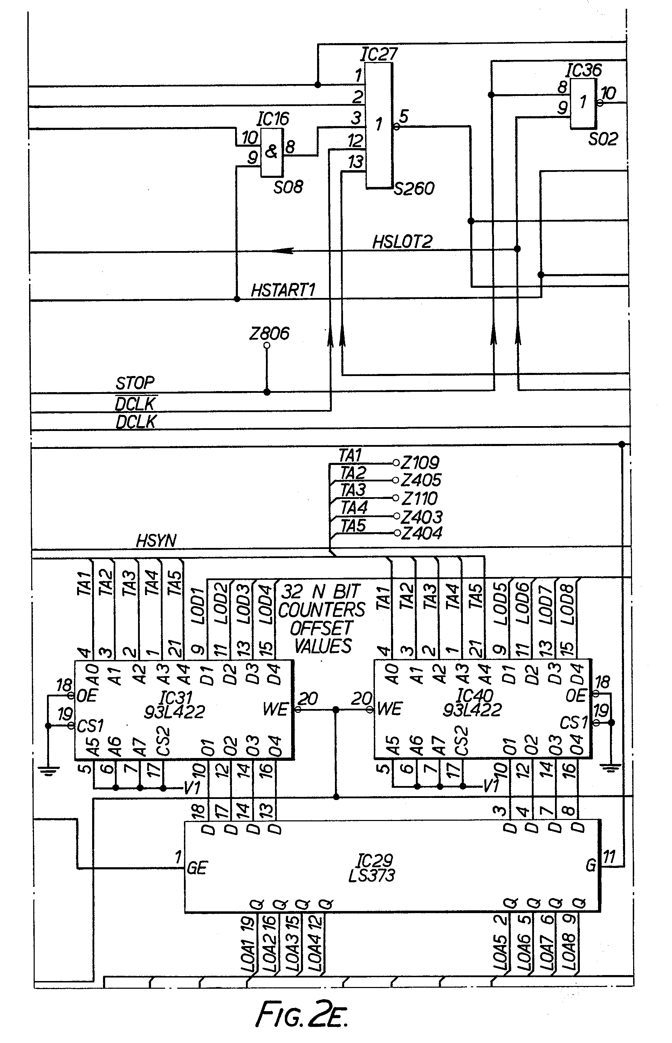

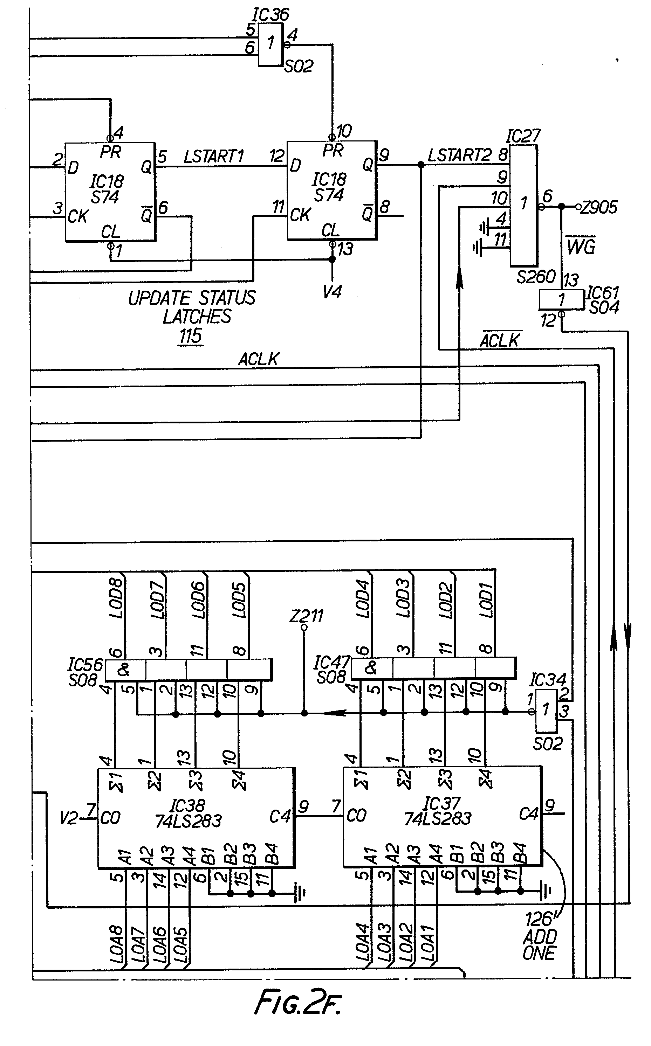

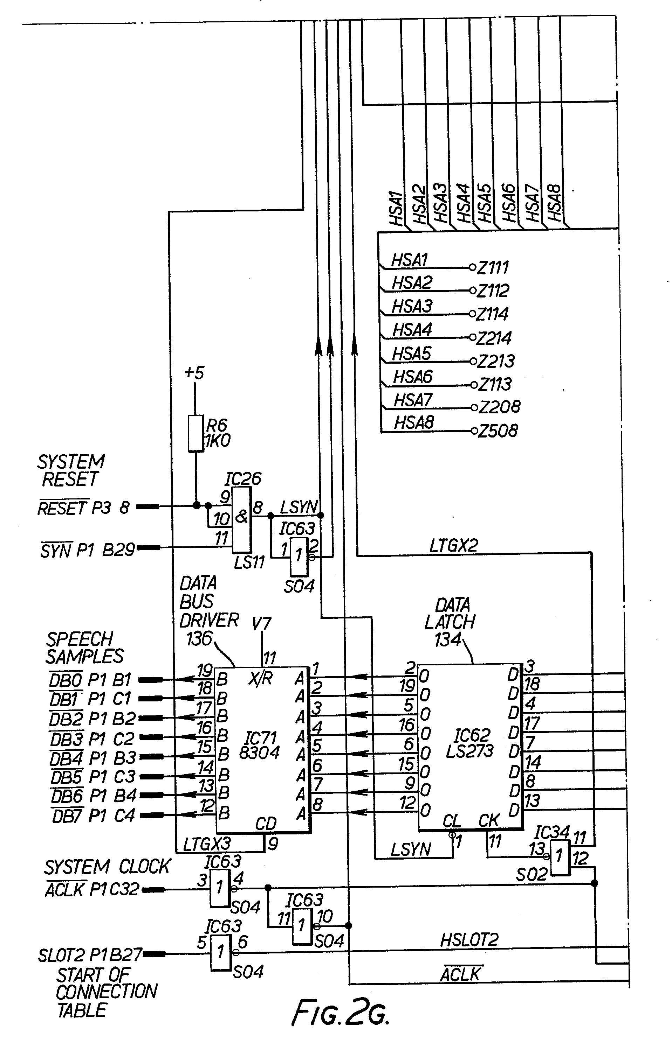

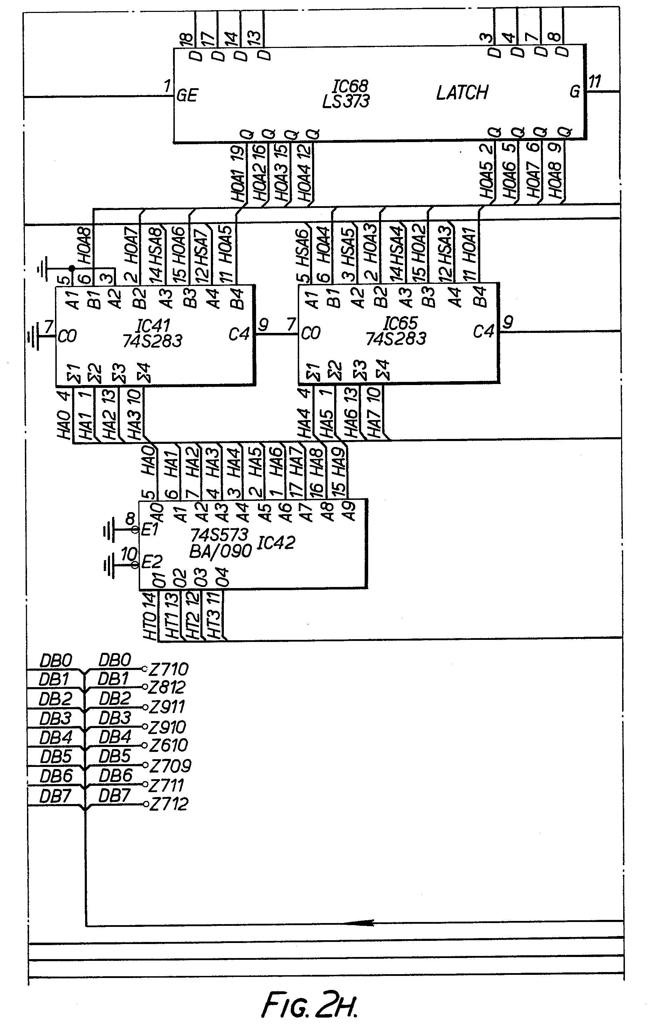

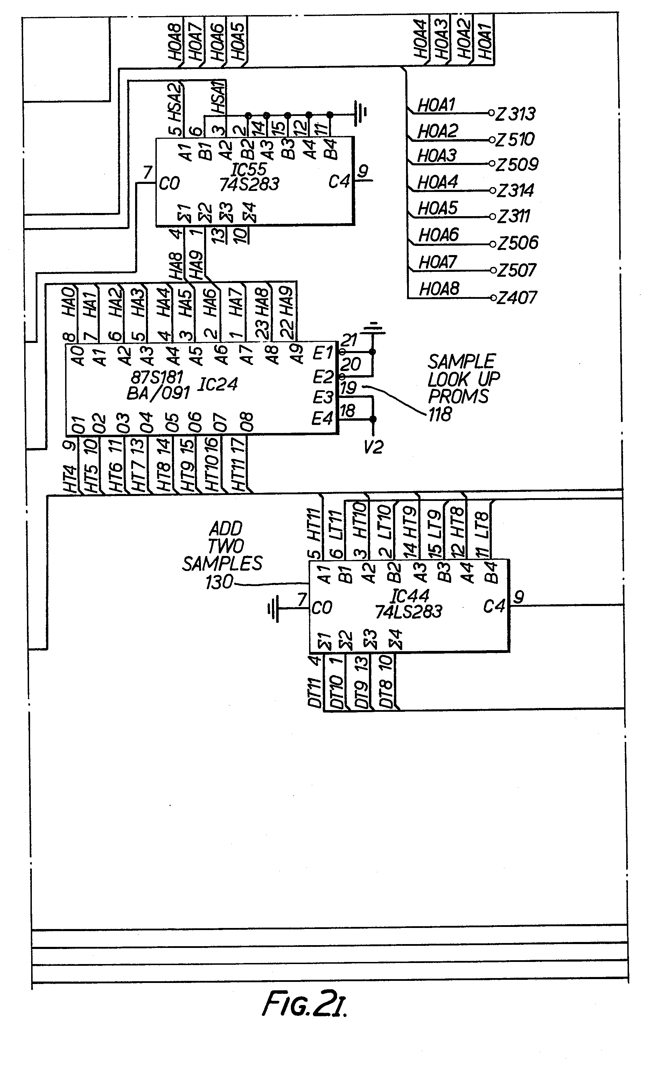

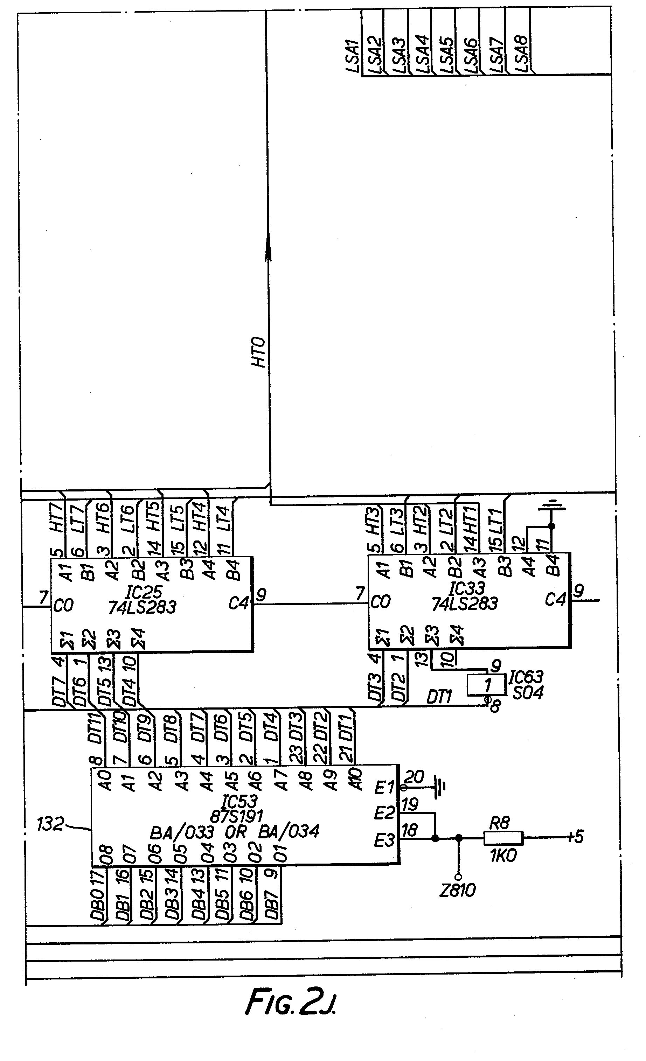

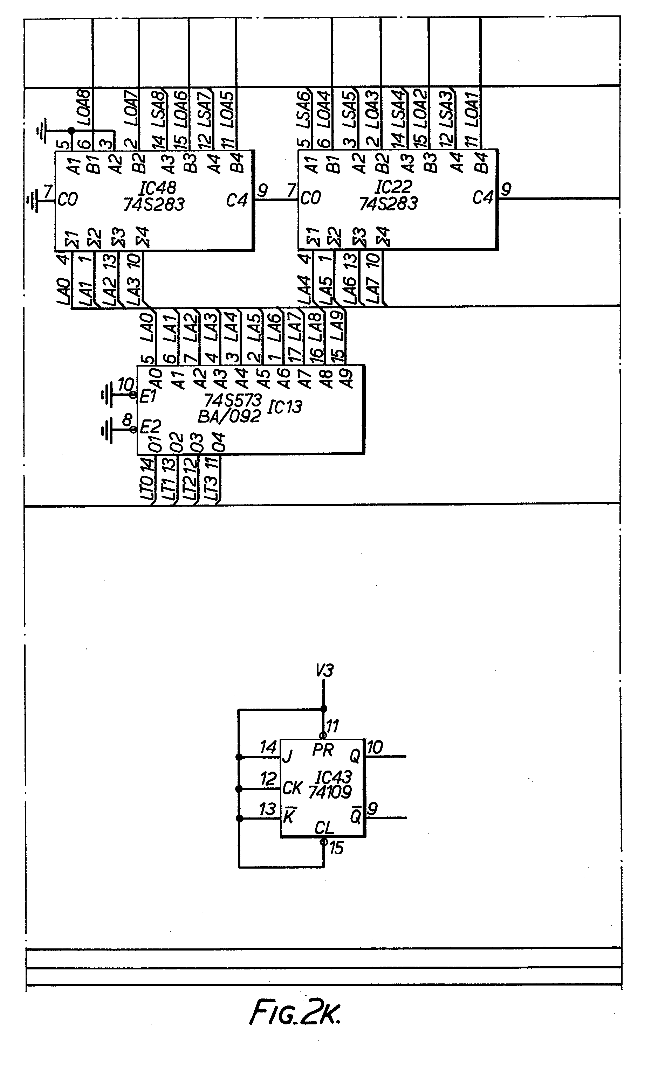

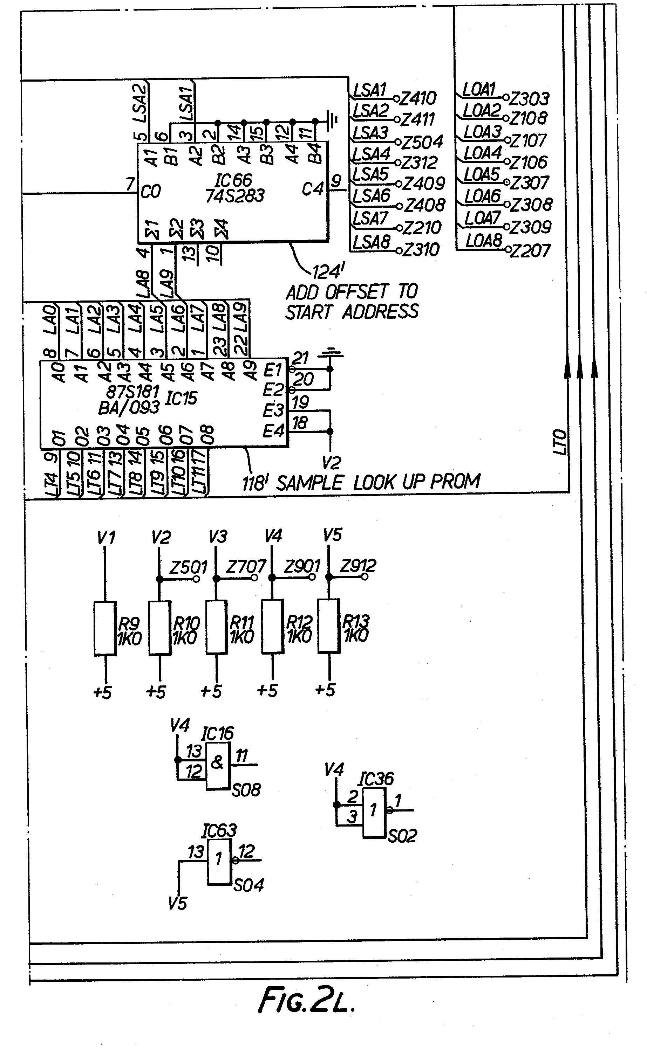

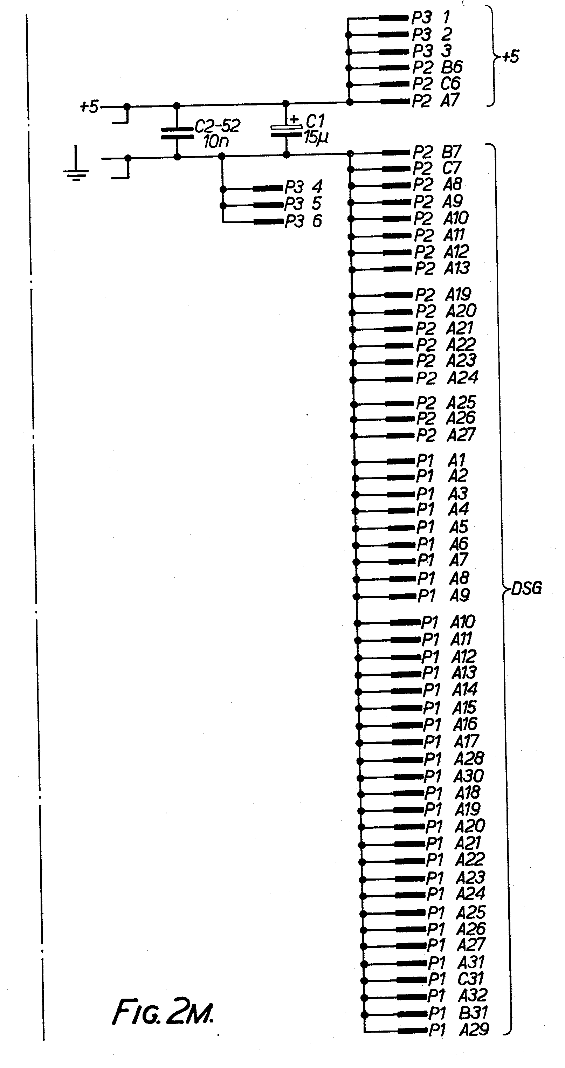

The tone generator shown in Figures 1 and 2 produces all supervisory tones required by a PABX telephone system. It generates 8 bit A law companded PCM signals at an 8KHz rate although other rates could be generated to conform with other PABX system clock rates. (Also μ law or linear.)

This tone generator can be used in an exchange such as described in our co-pending British Patent Application No: 8323782. The tone generator receives commands from an address bus such as ABI and in the

-3-

above exchange and transmits bytes of data (8 bit PCM samples) onto the data bus. This digital PCM sample goes through a CODEC to produce analog supervisory tones. The tone generator operation is automatic and has 128 channels enabling any one of 32 tones to be sent to 128 different CODECS.

The described tone generator is programmed to produce any one of 27 tones at one of nine transmission levels. But up to 32 tones at 32 different levels may be produced by simply re-programming the lookup table PROMS.

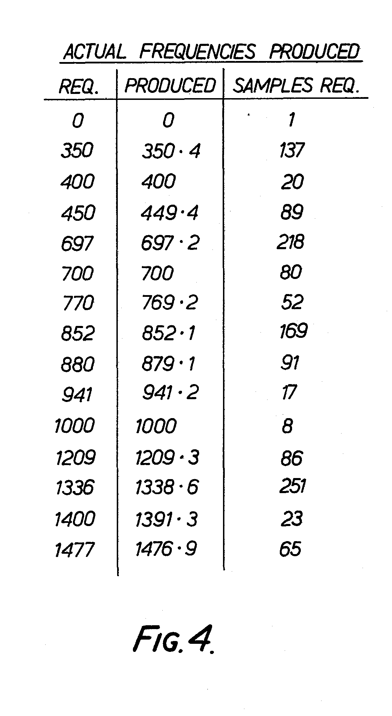

The method of production of each tone involves the storage of a complete number of cycles of a given tone in a PROM. The tone generator then cycles through the PROM to produce the required output. In order for this technique to operate an exact number of cycles of tone must effectively "fit" into the 8KHz (or other chosen) sampling rate. Hence as shown in Figure 4 the number of samples stored depends on the actual frequency required and a compromise of precise frequency generated against lookup table size is used.

thus for example:-

1000 Hz fits exactly into 8 samples

400 Hz fits exactly into 20 samples

450 Hz is stored as 449.438 Hz which is 89 samples (As 450 Hz would require 160 samples).

-4-

1209 Hz is stored as 1209.302 Hz which is 86 samples.

In a preferred embodiment the largest number of samples stored is 255 samples per tone. 1336 Hz is stored as 1338.645 Hz which is 251 samples which represents an error of only 0.19%.

As dual frequency tones are produced by the generator there are two sets of lookup PROMS. The first generates the low tones and the second generates the high tones. These are then added together before being companded into A law format or μ law or 8 bit linear.

It should be noted that this technique can be used to produce virtually any output waveform required ranging from ramps to special waveform shapes.

With reference now to Figure 1 the tone generator is shown in block diagrammatic form as connected into a telephone exchange such as described in our co-pending British Patent Application No: 8323782.

Thus to enable a desired tone to be generated at a correct time the upper portion of Figure 1 comprises an address header circut 102 defining which shelf in the telephone system the tone generator is allocated. This is connected to an address compare circuit 104 which compares the address stored in header 102 with an incoming address stored in an address latch 106 to see if a tone is required. A tone request is received on an address bus AB1 which is a 16 bit parallel bus. The interconnection lines in Figure 1 are nearly all parallel busses with varying bits shown by **adjacent** numerals. Where no numeral is shown the connection is by a single wire and is normally a control signal.

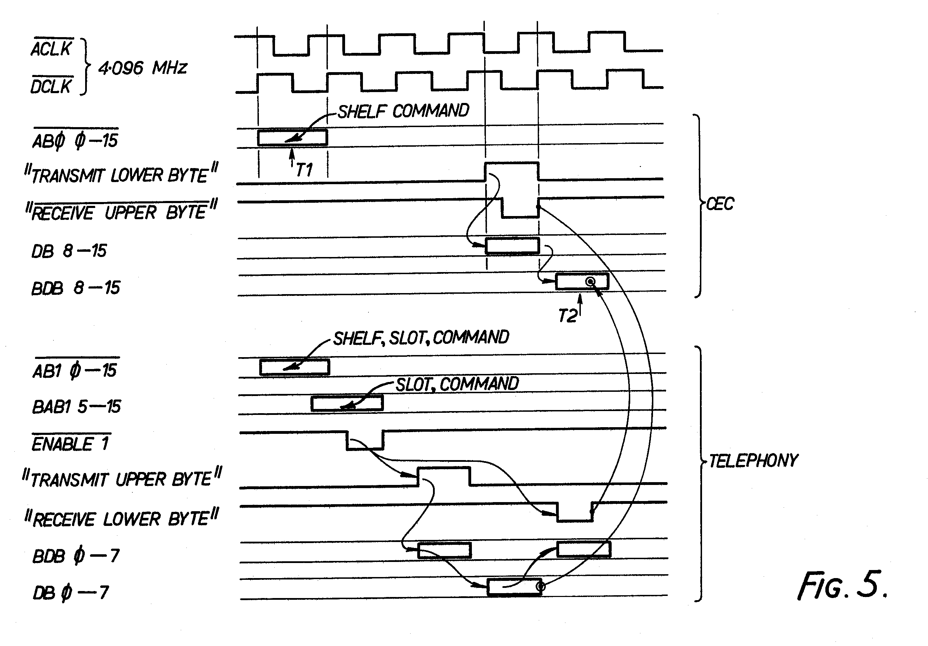

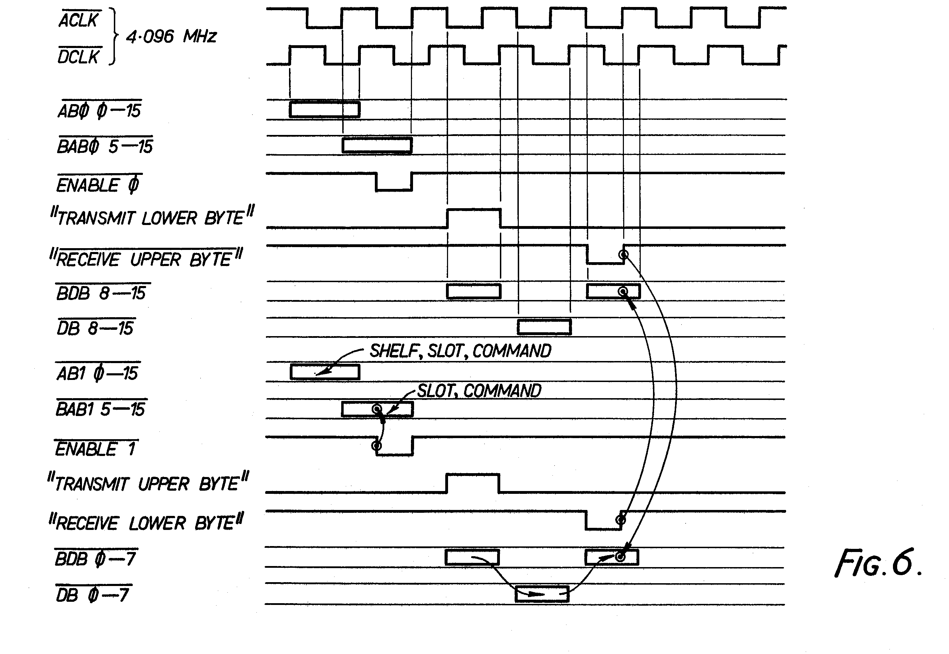

Thus only 5 of the 16 bits are required for the comparison of addresses as shown. The address compare circuit 104 is connected to a timing state logic control circuit 108 which controls the transmit and receive timings of the tone generator in synchronism with other system clocks ACLK; DCLK; SYN; and TSO. This ensures that the tones are emitted at the correct instances for the rest of the exchange system. For generation of tones in isolation from a TDM telephone exchange this synchronism would not be required and since it is not a part of the inventive concept the exact synchronism timings will not be described in great detail. In outline however with reference to Figures 5 and 6 it may be seen that the time delay between a shelf command at T1 and data being transmitted at T2 to an individual time slot requires synchronism. The delay is required to enable the tone generator to generate the desired output tone.

Two further bits from the input are fed via address latch 106 to an up/down logic circuit 110 which performs a card enable/disable function.

The timing state logic circuit 108 provides output signals to update a counter 112 which in conjunction with an address multiplexer 114 controls the stepping through the PCM lookup tables. The address multiplexer 114 received a 5 digit address from the address latch 106 which identifies the tone required in a particular time slot and multiplexes under the control of an update control logic circuit 115 between a tone request from the address bus AB1 and a PCM lookup table pointer update cycle.

The tone generation is carried out by two similar circuits which generate the upper and lower level tone. Since the operation of each circuit is identical except for the tones addressed in the tone PROMS then only one will be described.

Initially in a given time slot the start address PROM 116 is addressed to provide the start address in the tone PROM 118 of each of the various PCM sine wave lookup tables corresponding to the required frequency which when added to the frequency produced by the other tone PROM will produce the desired tone.

A cycle position RAM 120 stores the individual position of each pointer in each of the various sine wave lookup tables. In the practical embodiment described 32 pointers (displacements into each lookup table) are stored.

A latch 122 stores and forwards the cycle position of each table to an adder circuit 124. The latch 122 adds 1 to the current value of the pointer into the sine wave lookup table and this is also used to update the cycle position RAM 120 via an add 1 circuit 126 and a write control 128.

The adder circuit 124 adds the start address onto the displacement value to address the tone PROM 118.

The tone PROM 118 stores the various sine wave lookup tables. A whole number of cycles of each sine wave is stored. The exact number of PCM samples is varied in order to store a whole number of cycles.

The output from the tone PROM 118 is fed to an adder 130 where it is added to the output from the other tone PROM 128. The adder 130 adds together the two tones generated or possibly one tone and silence. The output of the adder 130 is fed to a companding PROM 132 which compands the 12 bit linear produced tones to 8 bit linear or 8 bit A law or 8 bit μ law as required,

The output of the companding PROM 132 is fed to a latch 134 and then to a bus driver 136 which supplies the required 8 bit coded tone signal to the exchange system. In a practical system the lookup tables in the tone PROMS 118, 118[1] may contain up to 256 PCM samples per tone number any wave shape may be generated by the system of the present invention. Thus for example triangular or other waveforms may be generated. For different amplitudes of tone a further complete set of amplitude values may be stored using the 256 samples available thus obviating the requirement for any analogue amplification.

-9-

CLAIMS:-

1. A tone generator for a telecommunication exchange in which the tones are stored in digital form in a memory, each tone being stored as a variable number of samples exactly corresponding to a whole number of cycles of each tone.

2. A tone generator for a telecommunication exchange as claimed in claim 1 in which the tones are stored in digital form in a tone PROM each tone being stored as a series of values the number in each series varying to conform closely to the desired output frequency.

3. A tone generator for a telecommunication exchange as claimed in claim 2 in which the tone PROM is controlled by a cycle position RAM which controls the position in each of said series of values which is addressed to ensure continuity of the generated tone.

4. A tone generator for a telecommunication exchange as claimed in claim 3 in which the tones are stored in an n bit PCM linear format for greater accuracy and are converted to an m bit PCM format for the exchange wherein $m < n$.

5. A tone generator for a telecommunication exchange substantially as described with reference to the accompanying drawings.

C. GOODMAN
Chartered Patent Agent
For the Applicant

Fig.1.

0119678

| | | | | | FIG. 2M. |
|---|---|---|---|---|---|
| FIG. 2A. | FIG. 2B. | FIG. 2C. | FIG. 2D. | FIG. 2E. | FIG. 2F. |
| FIG. 2G. | FIG. 2H. | FIG. 2I. | FIG. 2J. | FIG. 2K. | FIG. 2L. |

FIG. 2.

FIG.2A.

FIG.2B.

LTGX1
LTGX2
LTGX3

BUS TIMING LOGIC
105

IC34

S02

D CL Q
IC17
S175
Q̄
CK

D CL Q
IC17
S175
Q̄
CK

D CL Q
IC17
S175
Q̄
CK

D CL Q
IC17
S175
Q̄
CK

IC26
&
LS11
LTGX0

TB1 TB2 TB3 TB4 TB5
TC1 TC2 TC3 TC4 TC5
1A 1B 2A 2B 3A 3B 4A 4B
G
IC46
74S158
S
1Y 2Y 3Y 4Y
TA1 TA2 TA3 TA4

V8
1A 1B 2A 2B 3A 3B 4A 4B
G
IC60
74S158
S
1Y 2Y 3Y 4Y
TA5

Z611

114
REQUEST/UPDATE MUX

HOD8 HOD7 HOD6 HOD5
Z301
HOD4 HOD3 HOD2 HOD1

IC12
S08

IC59
S08

Σ1 Σ2 Σ3 Σ4
V2 CO
IC32
74LS283
C4
A1 A2 A3 A4 B1 B2 B3 B4

126
ADD
ONE

Σ1 Σ2 Σ3 Σ4
CO
IC50
74LS283
C4
A1 A2 A3 A4 B1 B2 B3 B4

FIG.2C.

Fig.2D.

0119678

FIG.2E.

FIG.2F.

0119678

FIG.2G.

0119678

FIG. 2H.

FIG.21.

0119678

LSA1 LSA2 LSA3 LSA4 LSA5 LSA6 LSA7 LSA8

HT0

IC25
74LS283

A1 5 HT7
B1 6 LT7
A2 3 HT6
B2 2 LT6
A3 14 HT5
B3 15 LT5
A4 12 HT4
B4 11 LT4
C0 7
C4 9
Σ1 Σ2 Σ3 Σ4
DT7 4
DT6 1
DT5 13
DT4 10

IC33
74LS283

A1 5 HT3
B1 6 LT3
A2 3 HT2
B2 2 LT2
A3 14 HT1
B3 15 LT1
A4 12
B4 11
C0 7
C4 9
Σ1 Σ2 Σ3 Σ4
DT3 4
DT2 1
13
10

DT1

IC63
S04
9
1
8

IC53
87S191
BA/033 OR BA/034

A0 8 DT11
A1 7 DT10
A2 6 DT9
A3 5 DT8
A4 4 DT7
A5 3 DT6
A6 2 DT5
A7 1 DT4
A8 23 DT3
A9 22 DT2
A10 21 DT1

E1 20
E2 19
E3 18

R8
1K0
+5

Z810

08 17 DB0
07 16 DB1
06 15 DB2
05 14 DB3
04 13 DB4
03 11 DB5
02 10 DB6
01 9 DB7

132

FIG. 2J.

0119678

FIG.2K.

0119678

FIG. 2L.

0119678

FIG. 2M.

| NUMBER | TONE | LEVEL | TONE | LEVEL | FUNCTION |
|--------|------|-------|------|-------|----------|
| 0 | 350 | 0 | 450 | 0 | DIAL TONE (TRUNK) |
| 1 | 400 | 0 | 450 | 0 | RING TONE (TRUNK) |
| 2 | 400 | 1 | 0 | – | BUSY/BLEEP/NU (TRUNK) |
| 3 | TEST 03 | – | TEST 03 | – | TONE GEN. SELF TEST |
| 4 | 697 | 2 | 1209 | 3 | 1 |
| 5 | 697 | 2 | 1336 | 3 | 2 |
| 6 | 697 | 2 | 1477 | 3 | 3 |
| 7 | 0 | – | 0 | – | SILENCE |
| 8 | 770 | 2 | 1209 | 3 | 4 |
| 9 | 770 | 2 | 1336 | 3 | 5 |
| 10 | TEST 12 | – | TEST 12 | – | TONE GEN. SELF TEST |
| 11 | 770 | 2 | 1477 | 3 | 6 |
| 12 | 852 | 2 | 1209 | 3 | 7 |
| 13 | 852 | 2 | 1336 | 3 | 8 |
| 14 | 852 | 2 | 1477 | 3 | 9 |
| 15 | 0 | – | 0 | – | |
| 16 | 941 | 2 | 1209 | 3 | ∗ |
| 17 | 941 | 2 | 1336 | 3 | 0 |
| 18 | 941 | 2 | 1477 | 3 | # |
| 19 | 941 | 9 | 1477 | 8 | 16 CHAN SELF TEST |
| 20 | 350 | 4 | 450 | 4 | DIAL TONE (EXTN) |
| 21 | 400 | 4 | 450 | 4 | RING TONE (EXTN) |
| 22 | 400 | 5 | 0 | – | BUSY/BLEEP/NU (EXTN) |
| 23 | 1400 | 6 | 0 | – | WARN TONE |
| 24 | 0 | – | 0 | | SILENCE |
| 25 | 0 | – | 1000 | 7 | CCITT TEST TONE |
| 26 | 700 | 4 | 880 | 4 | DIAL TONE HOLDING |
| 27 | 0 | – | 1000 | 6 | BEEP |
| 28 | TEST 34 | – | TEST 34 | – | TONE GEN. SELF TEST |
| 29 | 0 | 0 | 450 | 4 | EXPORT TONE |
| 30 | 697 | 2 | 0 | – | |
| 31 | 0 | – | 1000 | 2 | |

FIG. 3.

0119678

ACTUAL  FREQUENCIES  PRODUCED

| REQ. | PRODUCED | SAMPLES REQ. |
|------|----------|--------------|
| 0 | 0 | 1 |
| 350 | 350·4 | 137 |
| 400 | 400 | 20 |
| 450 | 449·4 | 89 |
| 697 | 697·2 | 218 |
| 700 | 700 | 80 |
| 770 | 769·2 | 52 |
| 852 | 852·1 | 169 |
| 880 | 879·1 | 91 |
| 941 | 941·2 | 17 |
| 1000 | 1000 | 8 |
| 1209 | 1209·3 | 86 |
| 1336 | 1338·6 | 251 |
| 1400 | 1391·3 | 23 |
| 1477 | 1476·9 | 65 |

FIG. 4.

FIG.5.

FIG. 6.

$\overline{ACLK}$ } 4·096 MHz
$\overline{DCLK}$

$\overline{AB\phi}\ \phi-15$

$\overline{BAB\phi}\ 5-15$

$\overline{ENABLE\ \phi}$

"TRANSMIT LOWER BYTE"

"RECEIVE UPPER BYTE"

$\overline{BDB\ 8-15}$

$\overline{DB\ 8-15}$

$\overline{AB1}\ \phi-15$

$\overline{BAB1}\ 5-15$

$\overline{ENABLE\ 1}$

"TRANSMIT UPPER BYTE"

"RECEIVE LOWER BYTE"

$\overline{BDB\ \phi-7}$

$\overline{DB\ \phi-7}$

SHELF, SLOT, COMMAND

SLOT, COMMAND

0119678

Application number

EP 84 30 0152

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-2 855 151 (SIEMENS) <br> * Page 5, line 22 - page 7, line 3; page 9, line 5 - page 11, line 15 * | 1-3 | H 04 Q 11/04 <br> H 04 Q 1/448 |
| X | FR-A-2 459 597 (C.G.C.T.) <br> * Page 1, line 36 - page 2, line 40; page 4, lines 28-33 * | 1-3 | |
| X | DE-A-2 309 789 (MARCONI) <br> * Page 2, line 7 - page 3, line 3; claims * | 1-3 | |
| X | DE-A-3 222 314 (SIEMENS) <br> * Page 24, lines 14-26; page 27, lines 16-31 * | 1,4 | |
| X,P | FR-A-2 529 426 (THOMSON) <br> * Whole document * | 1,2 | TECHNICAL FIELDS SEARCHED (Int. Cl. 3) <br><br> H 04 Q |

The present search report has been drawn up for all claims

| Place of search <br> THE HAGUE | Date of completion of the search <br> 12-04-1984 | Examiner <br> GERLING J.C.J. |
|---|---|---|